# EUROPEAN PATENT APPLICATION

(11) **EP 2 161 518 A2**
(43) Date of publication of application: **10.03.2010**
(21) Application number: 09168542.0
(22) Date of filing: 25.08.2009
(51) Int. Cl.: F25B 27/00

(54) **Backup power system for cryo-cooled elements in wind turbines**

(30) Priority: 09.09.2008 US 206878
(71) Applicant: General Electric Company, Schenectady, NY 12345 (US)
(72) Inventor: Jansen, Patrick L., Scotia, NY 12302 (US); Laskarls, Evangelos T., Schenectady, NY 12309 (US); Bray, James W., Niskayuna, NY 12309 (US); Sivasubramaniam, Kiruba, Clifton Park, NY 12065 (US)
(74) Representative: Bedford, Grant Richard

(57) **Abstract**

A cooling system 135 is provided for supplying cryogenic cooling fluid to a thermal load. The system includes a cryogenic refrigeration system, a cryogenic cooling fluid coupled to the thermal load, and a primary power supply for providing power to the cryogenic refrigeration system. A backup power supply 130 provides power to the cryogenic refrigeration system in the event that the primary power supply is unable to provide sufficient power to the cryogenic refrigeration system.

## Description

This invention relates generally to backup power systems, and specifically to backup power systems used to power cryogenically cooled elements in a wind turbine.

Recently, wind turbines have received increased attention as an environmentally safe and relatively inexpensive alternative energy source with zero green house gas (GHG) emissions. With this growing interest, considerable efforts have been made to develop wind turbines that are reliable and efficient.

Generally, wind turbines use the wind to generate electricity. The wind turns one or more blades connected to a hub, where the blades and hub can comprise a rotor. The spin of the blades caused by the wind spins a shaft connected to the rotor, which connects to a generator that generates electricity. Specifically, the rotor is mounted within a housing or nacelle, which is positioned on top of a truss or tubular tower. Utility grade wind turbines (e.g., wind turbines designed to provide electrical power to a utility grid) can have large rotors (e.g., 30 or more meters in diameter). Blades on these rotors transform wind energy into a rotational torque or force that drives one or more generators, rotationally coupled to the rotor through a gearbox. The gearbox may be used to step up the inherently low rotational speed of the turbine rotor for the generator to efficiently convert mechanical energy to electrical energy, which is provided to a utility grid. Some turbines utilize generators that are directly coupled to the rotor without using a gearbox.

To improve the efficiency and performance of a wind turbine, superconducting generators can be used, but require a cryogenic cooling system that maintains the low temperatures required by superconducting field coils. If the cryogenic cooling system loses power for an extended time (e.g., greater than about three hours), the cryo-coolant can warm up to the point where boil-off may occur. The loss of coolant normally requires service personnel to recharge the cryo-system. In addition, the warming of the cryogenic cooling system can add considerable cool-down time (e.g. twelve hours to three days) to the overall downtime of the wind turbine.

In accordance with one aspect of the present invention, a cooling system is provided for supplying cryogenic cooling fluid to a thermal load. The system includes a cryogenic refrigeration system, a cryogenic cooling fluid coupled to the thermal load, and a primary power supply for providing power to the cryogenic refrigeration system. A backup power supply provides power to the cryogenic refrigeration system in the event that the primary power supply is unable to provide sufficient power to the cryogenic refrigeration system.

Various aspects and embodiments of the present invention will now be described in connection with the accompanying drawing, in which:

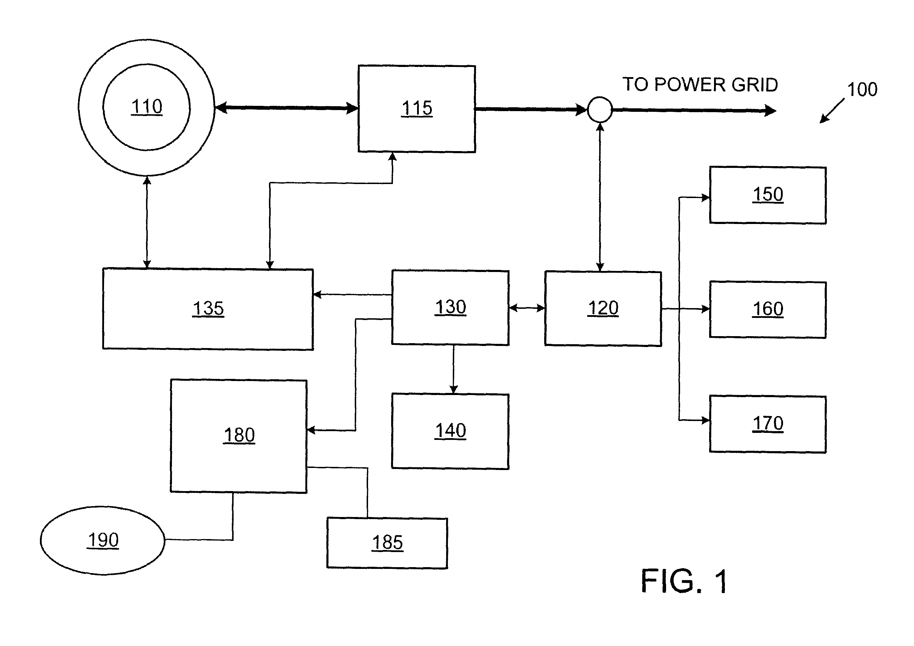

FIG. 1 is a block diagram illustration of one embodiment of the present invention showing an electrical system of a wind turbine generator that incorporates a backup power system.

FIG. 1 is a block diagram of one embodiment of an electrical system 100 of a wind turbine generator incorporating a backup power system. The example of FIG. 1 provides specific voltages that are typical for wind turbine generators in the 1.5 MW class for use in the United States. Other similar voltages can be used for 50 Hz wind turbine generators. In general, higher voltages are used for higher power ratings and lower voltages are used for lower power ratings. However, the overall architecture is applicable for many different types and sizes of wind turbines with the same and/or different voltages.

Generator 110 provides AC power to the power grid as well as to other components of wind turbine electrical system 100. In one embodiment, generator 110 provides 575 V (which is the rated voltage of the generator); however, any voltage can be provided. The power generated by generator 110 is provided to a wind farm substation or other facility for collecting power generated by multiple wind turbine generators via power converter 115, which may also provide power to low voltage distribution panel (LVDP) 120.

In one embodiment, LVDP 120 includes a transformer to transform the 575 V power received from generator 110 to 120 V, 230 V and 400 V power for use throughout the wind turbine (150 designates 120 volt systems, 160 designates 230 volt systems and 170 designates 400 volt systems, respectively). Other and/or additional power supply levels can be provided as desired. The wind turbine generator systems connected to LVDP 120 include, for example, the pitch system controls and motors, the yaw system controls and motors, various lubrication and cooling systems, electrical receptacles and lights, heaters and miscellaneous equipment. In general, the various sub-systems needing electrical power (e.g., cryogenic cooling system 135, turbine controller 140, turbine communications server 180, etc.) can be powered via LVDP 120, but the specific connections from LVDP 120 to the various sub-systems are not shown in FIG. 1 for clarity.

In one embodiment, LVDP 120 is connected to backup power supply 130. The backup power supply 130 provides power to one or more sub-systems in the event that LVDP 120 is unable to provide the required power. Backup power supply 130 can be any type of dispatchable or uninterruptible power supply, for example, a battery system, a photovoltaic system or any other power storage system known in the art. In other embodiments, backup power supply 130 can comprise a backup generator, which may include liquid or gas fueled electrical generators, fuel cells, solar panels, batteries, or any other power storage system known in the art.

The backup power supply can also provide power to a cryogenic cooling system 135. The backup power supply 130 can be connected directly to cryogenic cooling system 135 and any other sub-system, or it may be connected indirectly to various sub-systems through LVDP 120, or combinations thereof. For example, power converter 115 may also contain cryogenic components and can be connected to cryogenic cooling system 135.

Some wind turbines can incorporate one or more superconducting electrical generators 110. Cryogenic cooling system 135 maintains the low temperatures required by the superconducting field coils in generator 110. The cooling system 135 requires a continuous and reliable source of power to maintain the temperature of the field coils. If the cryogenic cooling system 135 loses power for an extended time (e.g., greater than about three hours), the cryo-coolant can warm up to the point where boil-off may occur. The loss of coolant normally requires service personnel to recharge the cryo-system. In addition, the warming of the cryogenic cooling system can add considerable cool-down time (e.g. twelve hours to three days) to the overall downtime of the wind turbine.

The backup power supply 130, which is connected to cryogenic cooling system 135, maintains the necessary power to cryogenic cooling system 135. The possibility for cryo-coolant boil-off, the associated maintenance and down-time can also be reduced or eliminated.

In one embodiment of the current invention, where a single wind turbine needs a backup power supply 135, the size of the backup power generator could be about five to twenty kilowatts. In other embodiments of the present invention, where a wind farm incorporates one or more backup power supplies, one backup power supply could service multiple wind turbines or all of the wind turbines. In this example, the backup generator could be sized in the range of about 500 to 2,000 kW. In all the examples above, the backup power supply could be sized below or above the given ranges, as required by the specific application.

In additional aspects of the present invention, the backup power supply could be connected with the main power supply via an automatic or controllable transfer switch. In automatic configurations, the transfer switch could be configured to automatically switch in the backup power supply upon loss of main power. The transfer switch may also have a predetermined delay to avoid premature switching due to very short voltage transients. In one example, the transfer switch could be configured to switch over to backup power if main power is lost for greater than five seconds. This time period could be shorter or longer based on the needs of the specific application.

Other sub-systems in the wind turbine can also be powered by backup power supply 130 in the event of a power loss. Turbine communications server (TCS) 180 can be coupled to receive power from backup power supply 130, either directly or indirectly. TCS 180 may also be coupled with wind farm network 190 to provide data to a remote device, for example, a server device that interacts with multiple TCSs in a wind farm. TCS 180 is coupled with turbine controller 140 as well as other components (coupling not illustrated in FIG. 1 for reasons of simplicity) to provide control and data acquisition operations.

TCS 180 can also be coupled with database 185, which stores data acquired from the components of the wind turbine. In one embodiment, TCS 180 acquires real time and historical data from wind turbine controllers and other devices within wind turbine 100 using a real time interrupt driven database manager. TCS 180 also performs secondary data processing, alarming, configuration management and data compression, stores or archives data in a real time and historical database in database 185.

TCS 180 also serves real time data to single or multiple SCADA master using a real time SCADA protocol over wind farm network 190. TCS 180 further serves historical data to a central database using ODBC protocol and provides a user and configuration interface via an embedded browser. TCS 180 can either be an independent hardware device (e.g., a computer system or other electronic device) that interfaces and communicates with turbine controller 140 or the functionality of TCS 180 may be implemented in the turbine controller 140.

In additional aspects of the present invention, the backup power supply for the cryogenic cooling system could be replaced with or used in conjunction with a large cold-storage reservoir. The reservoir could be comprised of a liquid cryogenic medium (e.g., liquid helium, etc.) or a cooled block of dense matter.

While the invention has been described in connection with what is presently considered to be one of the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A cooling system for providing cryogenic cooling fluid to a thermal load, said system comprising:
a cryogenic refrigeration system (135);
a cryogenic cooling fluid coupled to said thermal load;
a primary power supply (120) for providing power to said cryogenic refrigeration system; and
a backup power supply (130) for providing power to said cryogenic refrigeration system in the event that said primary power supply (120) is unable to provide sufficient power to said cryogenic refrigeration system (135).

2. The cooling system of claim 1, wherein said thermal load is, at least one of, an electrical generator (110) and a power converter (115).

3. The cooling system of any preceding claim, wherein said thermal load comprises a part of a wind turbine.

4. The cooling system of any preceding claim, wherein said thermal load comprises at least one superconducting generator (110) in a wind turbine.

5. The cooling system of any preceding claim, wherein said thermal load comprises at least one superconducting generator (110) in a wind turbine, and said backup power supply (130) is located within or near said wind turbine.

6. The cooling system of any preceding claim, wherein said thermal load comprises a plurality of superconducting generators (110) in a plurality of wind turbines, said plurality of wind turbines comprising a wind farm; and said backup power supply (130) located within or near said wind farm.

7. The cooling system of any preceding claim, wherein said backup power supply (130) is chosen from at least one or combinations of, an electrical generator (110), a microturbine, a fuel cell, a solar panel, and a battery.
